**Europäisches Patentamt**

**European Patent Office**

**Office européen des brevets**

(19)

(11) Veröffentlichungsnummer : **0 406 630 B1**

(12)

# EUROPÄISCHE PATENTSCHRIFT

(45) Veröffentlichungstag der Patentschrift :
**12.05.93 Patentblatt 93/19**

(51) Int. Cl.$^5$ : **C08J 3/16,** C08L 21/00, C08L 33/06

(21) Anmeldenummer : **90111803.4**

(22) Anmeldetag : **22.06.90**

(54) **Mischungen thermoplastischer Polymerisate in Pulverform.**

(30) Priorität : **05.07.89 DE 3922103**

(43) Veröffentlichungstag der Anmeldung :
**09.01.91 Patentblatt 91/02**

(45) Bekanntmachung des Hinweises auf die
Patenterteilung :
**12.05.93 Patentblatt 93/19**

(84) Benannte Vertragsstaaten :
**DE ES FR GB IT**

(56) Entgegenhaltungen :
**EP-A- 0 121 855**
**US-A- 3 494 784**

(73) Patentinhaber : **BAYER AG**
**W-5090 Leverkusen 1 Bayerwerk (DE)**

(72) Erfinder : **Piejko, Karl-Erwin, Dr.**
**Unterscheider Weg 7a**
**W-5060 Bergisch-Gladbach 2 (DE)**
Erfinder : **Lindner, Christian, Dr.**
**Im Wasserblech 11**
**W-5000 Köln 91 (DE)**
Erfinder : **Ostarek, Ralph, Dr.**
**Bastionstrasse 27**
**W-4000 Düsseldorf 1 (DE)**
Erfinder : **Braese, Hans-Eberhard, Dipl.-Ing.**
**Käthe-Kollwitz-Strasse 3**
**W-5000 Köln 71 (DE)**
Erfinder : **Ott, Karl-Heinz, Dr.**
**Paul-Klee-Strasse 54**
**W-5090 Leverkusen 1 (DE)**

## Beschreibung

Die Erfindung betrifft ein Verfahren zur Herstellung von Mischungen thermoplastischer Polymerisate mit vernetzten Kautschuken in Pulverform aus wäßrigen Emulsionen der Polymerisate. Das Verfahren ist technisch besonders einfach und liefert nicht klebende Pulver mit verbesserter Rieselfähigkeit und Lagerbeständigkeit. Damit ist auch die Weiterverarbeitung entscheidend erleichtert.

Mischungen von Kautschuken, thermoplastischen Harzen (z.B. Copolymerisaten von Vinylverbindungen) und gegebenenfalls Pfropfpolymerisaten von Vinylverbindungen auf Kautschuke sind technisch wichtige thermoplastische Formmassen.

Viele dieser Kautschuke, Harze und Pfropfpolymerisate müssen in wäßriger Emulsion erzeugt und daraus isoliert werden, da insbesondere die Kautschuke und Pfropfpolymerisate als diskrete, vernetzte Mikroteilchen in Pulverform vorliegen sollen.

Zur Herstellung der Formmassen, die Kautschuke, Harze und Pfropfpolymerisate enthalten, kann man die Emulsionen der anfallenden Polymerisate vermischen und das Gemisch aufarbeiten. Die so gewonnene Polymerisatmischung besitzt vorteilhafte Eigenschaften für die Verarbeitung.

Für Mischungen in Pulverform sind die Pulvereigenschaften von Wichtigkeit. Beispielsweise ist häufig Rieselfähigkeit gefordert, die Korngrößenverteilung soll bestimmten Anforderungen angepaßt sein, die Pulver sollen nicht zum Zusammenbacken und Verklumpen neigen.

Man kann durch besondere - stufenweise - Koagulation, d.h. durch bestimmte aufeinander folgende Koagulationsschritte - "Gradientenkoagulation" - die Pulvereigenschaften in gewissem Umfang beeinflussen.

In EP-A 121 855, GB-PS 1 113 348 und GB-PS 1 568 469 werden Mischungen aus weichen und harten Polymeren in Pulverform so hergestellt, daß man durch "verzögerte" Koagulation des harten Polymeren eine Art Umhüllung der zum Zusammenkleben neigenden weichen Polymeranteile erreicht. In der EP-A 121 854 ist die Bildung von grobteiligem Pulver aus feinteiligem harten Polymer mittels weicher Polymerer in einer "Gradientenkoagulation" beschrieben.

Diese Verfahren sind technisch aufwendig und nur in besonderen Koagulationsanlagen mit entsprechender technischer Ausrüstung durchführbar.

Es wurde gefunden, daß man bei der Co-Koagulation wäßriger Emulsionen bestimmter Polymerisate reproduzierbar und ohne aufwendige Meß- und Regeltechnik einwandfreie pulverförmige Mischungen erhält, wenn man die Emulsionen gleichzeitig, aber getrennt koaguliert und sofort nach der Koagulation vermischt.

Gegenstand der Erfindung ist somit ein Verfahren zur Herstellung von Mischungen thermoplastischer Polymerisate in Pulverform aus wäßrigen Emulsionen von

a) teilchenförmigen, teilvernetzten kautschukartigen Copolymerisaten eines $C_2$-$C_8$-Alkylacrylates und/oder Butadien mit (bezogen auf Copolymerisat) bis zu 40 Gew.-% Acrylnitril, Styrol oder $C_1$-$C_4$-Alkylmethacrylat, welche mittlere Teilchendurchmesser ($d_{50}$) von 0,08 bis 1,0 μm und Gelgehalte von 40 bis 99 Gew.-% aufweisen und

b) thermoplastischen Harzen, die Homo- oder Copolymerisate aus Styrol, α-Methylstyrol, Methylmethacrylat oder Acrylnitril darstellen und gegebenenfalls bis zu 30 Gew.-% eines Kautschuks enthalten und gegebenenfalls

c) kautschukreichen Pfropfpolymerisaten von Styrol, α-Methylstyrol, Acrylnitril, Methylmethacrylat und/oder Alkylacrylat auf einen Dien- oder Alkylacrylatkautschuk mit einem Kautschukgehalt von 50 bis 95 Gew.-%,

das dadurch gekennzeichnet ist, daß man wäßrige Emulsionen von a) und b) und gegebenenfalls c) mit Polymerisatgehalten von 15 bis 50 Gew.-% bei 20 bis 10°C gleichzeitig, aber in separaten Mengenströmen, kontinuierlich oder halbkontinuierlich mit einer Koagulationslösung unter Koagulation der Polymerisate a) und b) und gegebenenfalls c) vermischt, die Mengenströme vereinigt und dann das Polymerisatgemisch abtrennt.

Bei Verwendung einer Komponente c) kann deren Emulsion getrennt - als 3. Zulauf - oder als Mischung mit a) oder b) oder auch aufgeteilt auf a) und b) mit der Koagulationslösung in Kontakt gebracht werden.

Unter Umständen kann es auch vorteilhaft sein, die Emulsionen der Komponenten a) und b) partiell zu vermischen, so daß die separaten Mengenströme aus a) plus 0 bis 50 % b) und aus b) plus 0 bis 50 % a) bestehen. Bevorzugt ist jedoch - bei Abwesenheit von c) - daß ein Mengenstrom aus Anteilen > 80 % b), insbesondere aus 100 % b) besteht. Die eventuelle Aufteilung der Komponente c) auf a) und/oder b) ist von deren Zusammensetzung abhängig. Bei Kautschukgehalten > 80 Gew.-% ist bevorzugt eine Zumischung zur Komponente a) vorzunehmen. Bei Kautschukgehalten < 80 Gew.-% können Anteile von c) zu b) gemischt werden.

Bevorzugt können Mischungen aus 30 bis 98 Gew.-% a), insbesondere 40 bis 96 Gew.-% a) und 2 bis 70 Gew.-% b), insbesondere 4 bis 60 Gew.-% b) sowie 0 bis 50 Gew.-% c), bezogen auf a) + b) + c) hergestellt werden.

Bei Anteilen von b) an der Gesamtmischung > 10 Gew.-%, insbesondere > 20 Gew.-%, werden bevorzugt Anteile der Emulsion von b) zu der von a) zugemischt, so daß als 2. Zulauf die Emulsionen von b) in solchen

2

Mengen vorhanden ist, daß deren Feststoffanteil, bezogen auf Gesamtfeststoff, 20 Gew.-%, insbesondere 10 Gew.-%, nicht überschreitet.

Die Komponenten a), b) und c) der erfindungsgemäß hergestellten Mischung sind bekannt.

Die kautschukartigen Copolymerisate a) der Erfindung sind teilchenförmige, teilvernetzte Copolymerisate eines $C_2$-$C_8$-Alkylacrylates (insbesondere Butylacrylat, Pentyl, Hexyl-, 2-Ethylhexylacrylat) und/oder Butadien mit bis zu 40 Gew.-% eingebautem Acrylnitril, Styrol oder $C_1$-$C_4$-Alkylmethacrylat, vorzugsweise mit 20 bis 35 Gew.-% dieser Monomere. Diese Kautschuke besitzen mittlere Teilchendurchmesser ($d_{50}$) von 0,08 bis 1,0 μm und Gelgehalte von 40 bis 99 Gew.-%, insbesondere von 75 bis 99 Gew.-%. Sie sind bekannt und können durch radikalische Emulsionspolymerisation bei Temperaturen > 30°C von Mischungen aus bis zu 40 Gew.-% Acrylitril, Styrol oder $C_1$-$C_4$-Alkylmethacrylat und 100 bis 60 Gew.-% Alkylacrylat und/oder Butadien hergestellt werden. Zur Einstellung der Teilvernetzung müssen besondere Bedingungen eingehalten werden. Verlangt ist eine Vernetzung (ausgedrückt durch den Gelgehalt) mit relativ geringer Vernetzungsdichte (ausgedrückt durch den Quellungsindex). Diese Eigenschaftskombination erhält man z.B., wenn man bei der Emulsionspolymerisation von Acrylatmonomeren bis zu 1 Gew.-% polyfunktionelle copolymerisierbare Allylverbindungen mitverwendet, insbesondere Triallylverbindungen wie Triallylisocyanurate.

Verwendet man Butadien als Monomer, dann kann auf polyfunktionelle Vinyl- oder Allylmonomere verzichtet werden, wenn man die Emulsionspolymerisation so führt, daß Butadien selbst als Vernetzer wirkt (z.B. durch Copolymerisation bei hohen Temperaturen - über 40°C, oder sogar über 60°C oder durch Polymerisation bis zu sehr hohen Umsätzen).

Die thermoplastischen Harze b) sind bevorzugt Homo- oder Copolymerisate von Styrol, α-Methylstyrol, Methylmethacrylat oder Acrylnitril; besonders geeignet sind Copolymerisate von Styrol und Acrylnitril, von α-Methylstyrol und Acrylnitril, von Styrol, α-Methylstyrol und Acrylnitril, von Methylmethacrylat und Styrol, von Methylmethacrylat und Acrylnitril sowie Polymethylmethacrylat. Besonders geeignete Harze enthalten wenigstens 50 Gew.-% Styrol oder α-Methylstyrol oder mehr als 80 Gew.-% Methylmethacrylat in polymerisierter Form. Auch solche Harze sind als b) geeignet, die eine geringe Menge eines Kautschuks einpolymerisiert enthalten; geeignete Kautschuke sind bekannte teilchenförmige, teilvernetzte Dienkautschuke oder Alkylacrylatkautschuke; die harzbildenden Monomere sind auf den Kautschuk pfropfpolymerisiert.

Auf jeden Fall darf der Kautschukgehalt der Komponente b) 30 Gew.-% nicht überschreiten.

Die gegebenenfalls in der Mischung enthaltene Komponente c) ist ein kautschukreiches Pfropfpolymerisat von Vinylverbindungen auf einen teilvernetzten, teilchenförmigen Kautschuk mit mittleren Teilchendurchmessern ($d_{50}$) von 0,05 bis 1 μm; pfropfpolymerisierte Vinylverbindungen sind Styrol, α-Methylstyrol, Acrylnitril, Methylmethacrylat und Alkylacrylat oder deren Mischungen; besonders bevorzugt sind Methylmethacrylat sowie Mischungen von Styrol und Acrylnitril, von α-Methylstyrol und Acrylnitril, von Methylmethacrylat und Styrol, von Methylmethacrylat und Alkylacrylat, von α-Methylstyrol, Methylmethacrylat und Acrylnitril. Als Kautschuke der Komponenten c) (Pfropfgrundlagen) kommen Dienmono- und -Copolymerisate, z.B. von Butadien, Isopren, Chloropren, gegebenenfalls mit bis zu 35 Gew.-% Comonomeren wie Styrol, Acrylnitril, Methylmethacrylat, Alkylacrylat, Vinylmethylether in Betracht oder Alkylacrylat-Polymerisate (insbesondere von $C_1$-$C_8$-Alkylacrylaten), die gegebenenfalls bis zu 20 Gew.-% Vinylmonomere wie Styrol, Acrylnitril, Vinylacetat, $C_1$-$C_8$-Alkylmethacrylat einpolymerisiert enthalten; die Acrylatkautschuke sind meist durch Einpolymerisieren polyfunktioneller Vinyl-oder Allylmonomere partiell vernetzt; vernetzende Monomere sind z.B. Bis-Acrylate, Bis-Acrylamide, Butadien, Acrylsäurevinylester, Triallylcyanurat, Triallylisocyanurat, Zitronensäuretrisallylester, Bis-Carbonsäurevinylester.

Die Acrylatkautschuke enthalten die vernetzenden Monomere in Mengen bis maximal 5 Gew.-%. Die Kautschuke in Komponente c) können auch Kern/Mantel-Struktur besitzen, d.h. die Acrylatkautschukpartikel enthalten einen Kern aus einem anderen Kautschuk als dem ihn umgebenden Acrylatkautschuk, oder einen Kern aus einem harten thermoplastischen Harz.

Die Komponente c) enthält im allgemeinen 50 bis 95 Gew.-% Kautschuk, bevorzugt 60 bis 85 Gew.-%.

Die Komponenten a), b) und c) können in bekannter Weise durch Emulsionspolymerisation in wäßrigen Medien bzw. Emulsionspfropfpolymerisation in Gegenwart von Kautschuklatices hergestellt werden. Im Falle von kautschukfreien Polymerisaten b) werden die Monomere bei pH-Werten von ca. 12 bis 2, insbesondere von 10 bis 3, radikalisch in Gegenwart von Seifen (Emulgatoren) im wäßrigen Medium polymerisiert. Als Initiatoren kommen insbesondere wasserlösliche Radikalbildner wie Peroxodisulfate, Peroxodiphosphate, wasserlösliche Hydroperoxide und Peroxosäuren in Betracht, sowie Redoxinitiatorsysteme. Die Polymerisation, die normalerweise bei 40 bis 90°C durchgeführt wird, erfordert die Anwesenheit eines ionischen Emulgators, insbesondere eines anionischen Emulgators, in Mengen bis zu 4 Gew.-%, bevorzugt bis zu 2 Gew.-%, bezogen auf die Monomere. Geeignete Emulgatoren sind beispielsweise Fettsäuresalze, Alkylsulfonsäuresalze mit längerkettigen Alkylresten und Schwefelsäurealkylhalbester mit längerkettigen Alkylresten.

Zur Herstellung von Pfropfpolymerisaten auf Kautschuke können die zu pfropfenden Monomere in Gegenwart einer wäßrigen Kautschukemulsion ähnlich wie oben beschrieben polymerisiert werden.

Für das erfindungsgemäße Verfahren werden wäßrige Emulsionen a), b) und gegebenenfalls c) eingesetzt mit Polymerfeststoffgehalten von 15 bis 50 Gew.-%, vorzugsweise von 20 bis 40 Gew.-%, besonders günstig sind zur Durchführung des erfindungsgemäßen Verfahrens Emulsionen von a), b) und gegebenenfalls c) mit etwa gleichem Polymerfeststoffgehalt, bevorzugt ca. 30 bis 40 Gew.-% einzusetzen.

Das erfindungsgemäße Verfahren kann wie folgt durchgeführt werden:

In einem kontinuierlichen oder diskontinuierlichen Prozeß in einem oder in mehreren, hintereinander geschalteten Reaktoren werden die Latices der Komponenten a), b) und gegebenenfalls c) unter Rühren getrennt eingespeist. Im Reaktor befindet sich eine wäßrige Koagulationslösung. "Getrennt eingespeist" bedeutet, daß die Emulsionen so in den Reaktor eingegeben werden, daß sie ohne sich zu vermischen in die Koagulationslösung gelangen. Dies läßt sich dadurch erreichen, daß man die Emulsionen über getrennte Einspeisevorrichtungen an verschiedenen Stellen des Reaktors eindosiert. Man arbeitet bei Temperaturen von 20 bis 100°C. Bevorzugt erreicht die Temperatur am Ende der Koagulation bzw. in der letzten Stufe des Verfahrens Werte von 60 bis 100°C. Besonders in Fällen, in denen die resultierende Mischung aus Anteilen > 80 Gew.-% a) besteht, ist eine Arbeitsweise bevorzugt, bei der die Endtemperatur der Koagulation mindestens 40°C höher ist als die Anfangstemperatur. Als Koagulationslösung vewendet man wäßrige Lösungen von wasserlöslichen anorganischen oder organischen Säuren und/oder Salzen wie Salzsäure, Schwefelsäure, Phosphorsäure, Ameisensäure, Essigsäure, Propionsäure, Alkali-und Erdalkali-Chloride, -sulfate, -formiate, -acetate, -phosphate. Im allgemeinen benutzt man 0,5 bis 15 gew.-%ige wäßrige Lösungen, je nach zu koagulierender Latexmischung. Koagulationslösung, Emulsion von a), Emulsion von b) und gegebenenfalls c) müssen bei der angegebenen Temperatur intensiv vermischt werden, wobei bevorzugt so stark gerührt wird, daß stark turbulente Strömungen entstehen.

Arbeitet man in mehreren, hintereinander geschalteten Reaktoren, so dosiert man die Emulsionen vorteilhaft in den ersten Reaktor; in den weiteren Reaktoren kann der bei der Koagulation gebildete Polymerisatbrei in Wasser bei den gleichen Temperaturen wie im ersten Reaktor oder bevorzugt bei höheren Temperaturen nachbehandelt werden. Durch diese Nachbehandlung kann man die Kornstruktur der Polymerisatpulver und die Teilchengrößenverteilung verbessern. Das erfindungsgemäße Verfahren benötigt Verweilzeiten von 15 Minuten bis 5 Stunden, bevorzugt von 1 Stunde bis 3 Stunden.

Das erfindungsgemäße Verfahren besitzt gegenüber den bekannten stufenweisen Koagulationsverfahren den Vorteil, daß keine Fällsuspension der reinen Kautschuke (Komponente a)) anfällt und gehandhabt werden muß (1. Stufe der bekannten Verfahren), bei der insbesondere bei nur teilvernetzten Kautschuken eine starke Neigung zum Verkleben vorhanden ist. In dieser instabilen Stufe kann somit eine dauernde Veränderung der Teilchengrößen zu groben Partikeln hin auftreten, wodurch eine sehr breite Teilchengrößenverteilung entstehen kann bis hin zu extrem groben Partikeln. Eine reproduzierbare Teilchengrößenverteilung läßt sich in diesen Fällen nur mit einer aufwendigen Steuerung der Fällbedingungen erreichen. Des weiteren können in der ersten Stufe der bekannten Verfahren gebildete gröbere Partikel nach der Bepuderung in der zweiten Stufe im Verlauf des weiteren Aufarbeitungsprozesses wieder zerteilt werden, wodurch nicht bepuderte Oberflächen freigesetzt werden, die zu Verklebungen mit anderen Partikeln führen.

Der primär gebildete Polymerisatbrei kann in üblicher Weise, z.B. durch Filtrieren oder Schleudern abgetrennt und dann gewaschen und getrocknet werden.

Dabei werden pulverförmige Polymerisatmischungen mit verbesserter Korngrößenverteilung erhalten, die sich beispielsweise durch Rieselfähigkeit, gute Lagerstabilität und thermoplastische Verarbeitbarkeit bemerkbar macht. Da die Polymerisatmischungen als Zusätze zu bekannten thermoplastischen Kunststoffen wie Polyvinylchlorid und ABS verwendet werden, um deren Eigenschaften, z.B. Zähigkeit und Dehnungsverhalten zu verbessern, ist es entscheidend, daß sich das Pulver gut in kontinuierlich arbeitende Verarbeitungsvorrichtungen für Thermoplaste einspeisen läßt, sich mit der Schmelze des thermoplastischen Kunststoffs bei hohen Temperaturen vermischt und darin gleichmäßig verteilt oder löst. Die erfindungsgemäßen Produkte besitzen diese Eigenschaften.

Die Staudinger-Indices wurden in Dimethylformamid ermittelt (vgl. dazu M. Hoffman et al., "Polymeranalytik I und II", Georg Thieme Verlag, Stuttgart, 1977). Die Teilchendurchmesser sind $d_{50}$-Werte und durch Ultrazentrifugenmessung ermittelt (vgl. dazu W. Scholtan et al., Kolloidz. und Z. Polymere 250 (1972)).

EP 0 406 630 B1

Beispiele

I. Eingesetzte Emulsionen

Komponente a 1

Emulsion eines Kautschuk-Copolymerisats aus 30 Gew.-% Acrylnitril und 70 Gew.-% 1,3-Butadien mit einem mittleren Teilchendurchmesser ($d_{50}$-Wert) von 0,125 µm und einem Gelgehalt von 92 % (in DMF). Die Emulsion besitzt einen Feststoffgehalt von 28 Gew.-%.

Komponente a 2

Emulsion eines Kautschuk-Copolymerisats aus 30 Gew.-% Acrylnitril und 70 Gew.-% Butylacrylat mit einem mittleren Teilchendurchmesser ($d_{50}$) von 0,2 µm und einem Gelghalt von 93 Gew.-%. Die Copolymer-Emulsion wurde durch vernetzende Terpolymerisation mit Triallylcyanurat erhalten. Sie besitzt einen Feststoffgehalt von 38 Gew.-%.

Komponente b 1

Emulsion eines Copolymerisats aus 28 Gew.-% Acrylnitril und 72 Gew.-% Styrol mit einem Feststoffgehalt von 34 Gew.-%. Das isolierte Copolymer besitzt einen Staudinger Index (in DMF bei 23°C ermittelt) von 0,7 dl/g.

Komponente b 2

Emulsion eines Polymerisats aus Methylmethacrylat mit einem Feststoffgehalt von 33 Gew.-%. Das isolierte Polymer besitzt einen Staudinger-Index (in DMF bei 23°C ermittelt) von 0,5 dl/g.

Komponente c

Emulsion eines Pfropfpolymerisats aus 60 Gew.-% einer Kautschukgrundlage aus n-Butylacrylat, teilvernetzt mit Triallylcyanurat mit einer mittleren Teilchengröße ($d_{50}$-Wert) von 0,5 µm und einem Gelgehalt von 90 Gew.-% und 40 Gew.-% einer darauf pfropfpolymerisierten Monomermischung aus 72 Gew.-% Styrol und 28 Gew.-% Acrylnitril. Die Emulsion besitzt einen Feststoffghalt von 34 Gew.-%.

II. Koagulation zu pulverförmigen Polymerisatmischungen

Die folgenden Versuche zur Koagulation und Isolierung werden mit insgesamt 1000 Gew.-Teilen Polymerisat durchgeführt. Koagulationsmittel ist eine Lösung aus 5000 Gew.-Teilen Wasser und 200 Gew.-Teilen Magnesiumsulfat. Koaguliert wird bei 90°C.

II.1 Erfindungsgemäßes Verfahren

Beispiele II.1.1 - II.1.3

In das auf 90°C erhitzte Koagulationsmittel werden unter schnellem Rühren mit einem Propellerrührer die Emulsionen von Polymer a) und von Polymer b), entsprechend den in Tabelle 1 angegebenen Feststoffanteilen über separate Zulaufeinrichtungen innerhalb von 1/2 Stunde eindosiert und danach 1/2 Stunde bei 90°C nachgerührt.

5

Tabelle 1

| Versuchs-Nr. | Zulauf 1 | Zulauf 2 |
|---|---|---|
| | Emulsion/ Gew.-Anteil bezogen auf Feststoff | Emulsion/ Gew.-Anteil bezogen auf Feststoff |
| II.1.1 | a 1 / 900 | b 1 / 100 |
| II.1.2 | a 1 / 950 | b 2 / 50 |
| II.1.3 | a 2 / 900 | b 2 / 100 |

Beispiel II.1.4

Analog der Beispiele II.1.1 - II.1.3 wird als Zulauf 1 eine Mischung aus 400 Gew.-Anteilen b 2 (Gew.-Anteile bezogen auf Feststoff der Emulsionen) und 450 Gew.-Anteilen c und als 2. Zulauf 150 Gew.-Anteile b 1 eingesetzt.

Beispiel II.1.5

Analog der Beispiele II.1.1 - II.1.3 werden 950 Gew.-Anteile (bezogen auf Feststoff) a 2 und 50 Gew.-Anteile b 1 in das Koagulationsmittel bei 30°C getrennt eindosiert. Danach wird unter weiterem Rühren auf 90°C erhitzt und ca. 15 min weitergerührt.

II.2 Vergleichsversuche II.2.1 - II.2.4

Die Beispiele II.1.1 - II.1.4 werden wiederholt, wobei die eingesetzten Emulsionen jedoch miteinander vermischt werden und als Mischung in das Koagulationsmittel eindosiert werden. Die weiteren Bedingungen sind wie oben angegeben.

III. Aufarbeitung und Eigenschaften der Polymerisate

Zur weiteren Aufarbeitung der nach II.1 und II.2 hergestellten Polymerisataufschlämmungen werden diese in einer Zentrifuge, Fa. Carl Padberg, Modell GZ 300 (Innendurchmesser 300 mm; 1400 U/min) zentrifugiert, 15 min mit Wasser praktisch elektrolytfrei gewaschen und 15 min trockengeschleudert. Das erhaltene Feuchtgut wird visuell beurteilt (siehe Tab 2) und bei 60°C getrocknet. Das trockene Polymerisat wird erneut visuell beurteilt und einem Druckbelastungstest unterworfen. Dazu wird in ein zylinderförmiges Rohr mit einem Innendurchmesser von 54 mm und einer Höhe von 60 mm Pulver bis zu einer Füllhöhe von 40 mm eingefüllt und mit einem Stempel (Durchmsser 51 mm) der Masse 3,6 kg 24 h bei Raumtemperatur belastet. Danach wird der Rohrinhalt vorsichtig nach unten herausgedrückt und beurteilt: Leicht fließende Pulver bilden dann einen kegelförmigen Haufen (Bewertung +), während Verbackungen oder Verklumpungen zu davon abweichenden Geometrien führen. Im Extremfall (Bewertung -) wird ein säulenförmiger Körper erhalten.

## Tabelle 2

## Eigenschaften der feuchten und getrockneten Polymerisate

| Beispiel Nr. | Feuchtgut | Trockengut | Belastungstest |
|---|---|---|---|
| II.1.1 | krümelig | flockig | + |
| II.1.2 | faserig | flockig | + |
| II.1.3 | krümelig | flockig | + |
| II.1.4 | pulvrig | feinkörnig | + |
| II.1.5 | pulvrig | feinkörnig | + |
| II.2.1 | hart, verklebt | gummiartige Masse | - |
| II.2.2 | hart, verklebt | gummiartige Masse | - |
| II.2.3 | hart, verklebt | gummiartige Masse | - |
| II.2.4 | z. Teil verkl. grobteilig | grobe Agglomerate | - |

**Patentansprüche**

1. Verfahren zur Herstellung von Mischungen thermoplastischer Polymerisate in Pulverform aus wäßrigen Emulsionen von

a) teilchenförmigen, teilvernetzten kautschukartigen Copolymerisaten eines $C_2$-$C_8$-Alkylacrylates und/oder Butadien mit (bezogen auf Copolymerisat) bis zu 40 Gew.-% Acrylnitril, Styrol oder $C_1$-$C_4$-Alkylmethacrylat, welche mittlere Teilchendurchmesser ($d_{50}$) von 0,08 bis 1,0 µm und Gelgehalte von 40 bis 99 Gew.-% aufweisen und

b) einem thermoplastischen Harz, das ein Homo- oder Copolymerisat aus Styrol, $\alpha$-Methylstyrol, Methylmethacrylat oder Acrylnitril darstellt und gegebenenfalls bis zu 30 Gew.-% eines Kautschuks enthält und gegebenenfalls

c) einem kautschukreichen Pfropfpolymerisat von Styrol, $\alpha$-Methylstyrol, Acrylnitril, Methylmethacrylat und/ oder Alkylacrylat auf einen Dien-oder Alkylacrylatkautschuk mit einem Kautschukgehalt von 50 bis 95 Gew.-%,

das dadurch gekennzeichnet ist, daß man wäßrige Emulsionen von a) und b) und gegebenenfalls c) mit Polymerisatgehalten von 15 bis 50 Gew.-% bei 20 bis 100°C gleichzeitig, aber in separaten Mengenströmen, kontinuierlich oder halbkontinuierlich mit einer Koagulatlösung unter Koagulation der Polymerisate a) und b) und gegebenenfalls c) vermischt, die Mengenströme vereinigt und dann das Polymerisatgemisch abtrennt.

**2.** Verfahren gemäß Anspruch 1, dadurch gekennzeichnet, daß man 30 bis 98 Gew.-% der Komponente a), 2 bis 70 Gew.-% der Komponente b) und 0 bis 50 Gew.-% der Komponente c), bezogen auf a) und b), einsetzt.

**Claims**

**1.** A process for the production of blends of thermoplastic polymers in powder form from aqueous emulsions of

a) particulate partly crosslinked rubber-like copolymers of a $C_{2-8}$ alkyl acrylate and/or butadiene containing (based on copolymer) up to 40% by weight acrylonitrile, styrene or $C_{1-4}$, alkyl methacrylate which have average particle diameters ($d_{50}$) of 0.08 to 1.0 $\mu$m and gel contents of 40 to 99% by weight and

b) a thermoplastic resin in the form of a homopolymer or copolymer of styrene, $\alpha$-methyl styrene, methyl methacrylate or acrylonitrile optionally containing up to 30% by weight of a rubber and, optionally,

c) a rubber-rich graft polymer of styrene, $\alpha$-methyl styrene, acrylonitrile, methyl methacrylate and/or alkyl acrylate on a diene or alkyl acrylate rubber having a rubber content of 50 to 95% by weight,

characterized in that aqueous emulsions of a) and b) and optionally c) having polymer contents of 15 to 50% by weight are continuously or semicontinuously and simultaneously mixed in separate streams with a coagulate solution at 20 to 100°C with coagulation of the polymers a) and b) and optionally c), the streams are combined and the polymer mixture is separated off.

**2.** A process as claimed in claim 1, characterized in that component a) is used in a quantity of 30 to 98% by weight, component b) is used in a quantity of 2 to 70% by weight and component c) is used in a quantity of 0 to 50% by weight, based on a) and b).

**Revendications**

**1.** Procédé de production de mélanges de polymères thermoplastiqUes sous forme de poudre, à partir d'émulsions aqueuses

a) de copolymères partiellement réticulés en particules, analogues à un caoutchouc, d'un acrylate d'alkyle en $C_2$ à $C_8$ et/ou de butadiène avec (par rapport au copolymère) jusqu'à 40 % en poids d'acrylonitrile, de styrène ou de méthacrylate d'alkyle en $C_1$ à $C_4$, qui présentent des diamètres moyens ($d_{50}$) de particules de 0,08 à 1,0 $\mu$m et des teneurs en gel de 40 à 99 % en poids et

b) d'une résine thermoplastique qui représente un homopolymère ou un copolymère de styrène, d'$\alpha$-méthylstyrène, de méthacrylate de méthyle ou d'acrylonitrile et contient éventuellement jusqu'à 30 % en poids d'un caoutchouc et, le cas échéant

c) d'un polymère greffé, riche en caoutchouc, de styrène, d'$\alpha$-méthylstyrène, d'acrylonitrile, de méthacrylate de méthyle et/ou d'acrylate d'alkyle sur un caoutchouc de diène ou d'acrylate d'alkyle avec une teneur en caoutchouc de 50 à 95 % en poids,

qui est caractérisé en ce qu'on mélange des émulsions aqueuses de a) et b) et, le cas échéant, c) ayant des teneurs en polymère de 15 à 50 % en poids, à 20-100°C, en même temps mais en courants séparés, en continu ou en semi-continu, avec une solution de coagulat, avec coagulation des polymères a) et b), et le cas échéant c), on réunit les courants, puis on sépare le mélange de polymères.

**2.** Procédé suivant la revendication 1, caractérisé en ce qu'on utilise 30 à 98 % en poids du composant a), 2 à 70 % en poids du composant b) et 0 à 50 % en poids du composant c), par rapport à a) et b).